(19) Europäisches Patentamt
European Patent Office
Office européen des brevets

(11) Veröffentlichungsnummer: **0 077 496**
**B1**

# (12) EUROPÄISCHE PATENTSCHRIFT

(45) Veröffentlichungstag der Patentschrift: **14.05.86**

(51) Int. Cl.⁴: **A 01 G 7/00**, C 09 K 11/06, C 08 K 5/00, G 02 B 5/22

(21) Anmeldenummer: **82109285.5**

(22) Anmeldetag: **07.10.82**

## (54) Verfahren zur Nutzbarmachung von Licht der Wellenlängen 470 bis 600 nm für die Fotosynthese.

(30) Priorität: **15.10.81 DE 3140897**

(43) Veröffentlichungstag der Anmeldung: **27.04.83 Patentblatt 83/17**

(45) Bekanntmachung des Hinweises auf die Patenterteilung: **14.05.86 Patentblatt 86/20**

(84) Benannte Vertragsstaaten: **BE DE FR GB IT NL**

(56) Entgegenhaltungen:
**EP - A - 0 046 164**
**WO - A - 81/00769**
**AT - B - 270 288**
**CH - A - 316 638**
**CH - A - 538 534**
**DD - A - 73 635**
**DE - A - 2 620 115**
**DE - A - 3 001 857**
**DE - A - 3 032 546**

(73) Patentinhaber: **BASF Aktiengesellschaft, Carl-Bosch-Strasse 38, D-6700 Ludwigshafen (DE)**
Patentinhaber: **Fraunhofer-Gesellschaft zur Förderung der angewandten Forschung e.V., Leonrodstrasse 54, D-8000 München 19 (DE)**

(72) Erfinder: **Seybold, Guenther, Dr., Friedrich-Ebert-Strasse 14, D-6708 Neuhofen (DE)**
Erfinder: **Breuer, Hans, Dr., Steinbrunnerweg 13, D-6719 Battenberg (DE)**
Erfinder: **Wittwer, Volker, Dr., Kammertalstrasse 15, D-7800 Freiburg-Tiengen (DE)**

**EP 0 077 496 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, dass die Fotosynthese der grünen Pflanzen an die Anwesenheit von Chlorophyll gebunden ist und dass der Wirkungsgrad von der Wellenlänge des eingestrahlten Lichtes abhängig ist. Diese Abhängigkeit wird durch die Absorptionsspektren der Chlorophylle a und b und der in der Pflanze vorkommenden Carotinoide bestimmt (s. z.B. A. Lehninger, Biochemie, 2. Auflage, S. 439, Verlag Chemie 1977, sowie Mohr, Schopfer, Lehrbuch der Pflanzenphysiologie, 3. Auflage (1978), Springer Verlag). Das Wirkungsspektrum der Fotosynthese durchläuft im Bereich von 470 bis 600 nm ein Mininum, d.h. die Pflanze kann Licht dieser Wellenlänge nur in geringem Masse verwerten.

Weiterhin werden das Pflanzenwachstum, die Keimung und Blüteninduktion durch Phytochrome beeinflusst, die ebenfalls im angegebenen Wellenlängenbereich absorbieren.

Aus der AT-B-270288 ist ein Verfahren zur Förderung des Pflanzenwachstums bekannt, bei dem ein organischer fluoreszierender Werkstoff mit Licht bestrahlt wird, das in Fluoreszenzlicht umgewandelt wird, das vorherrschend rote und blaue Wellenlängen aufweist, dagegen arm an grünen Wellenlängen ist.

Die Erfindung betrifft nun ein solches Verfahren zur Nutzbarmachung des Wellenlängenbereiches von 470 bis 600 nm für das Pflanzenwachstum und die Fotosynthese, das dadurch gekennzeichnet ist, dass man Licht des Wellenlängenbereichs 470 bis 600 nm durch nichtionogene fluoreszierende Verbindungen der Violanthron- oder Isoviolanthronreihe, Borkomplexe von Naphtholactamderivaten oder die Verbindung der Formel

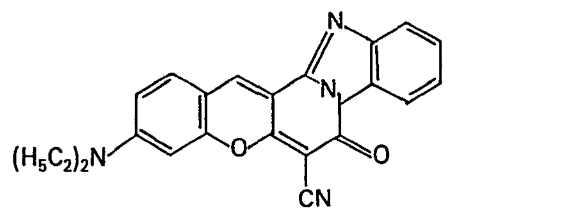

in Licht des Wellenlängenbereichs 600 bis 700 nm umwandelt, bei dem Maxima der Absorption des Chlorophylls sowie von Phytochromen liegen.

Als nichtionogene, fluoreszierende Verbindungen kommen solche in Betracht, die Licht im Bereich der Wellenlängen von 470 bis 600 nm absorbieren und im Bereich von 500 bis 700 nm mit guter Quantenausbeute emittieren und darüber hinaus hohe Fotostabilität besitzen. Es kann auch eine Kombination von Fluoreszenzfarbstoffen verwendet werden, wobei das Absorptions- und Fluoreszenzverhalten der Einzelkomponenten so aufeinander abgestimmt sein muss, dass ein wirkungsvoller Energietransfer vom kürzerwellig zum längerwellig absorbierenden Farbstoff stattfinden kann.

Geeignete fluoreszierende Farbstoffe sind z.B. die Verbindungen der Formeln

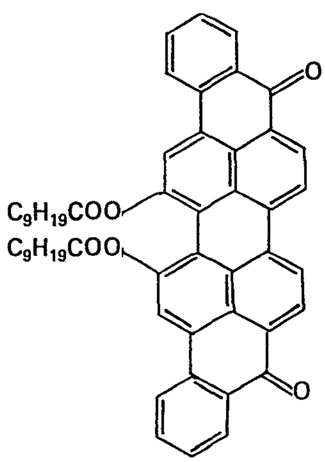

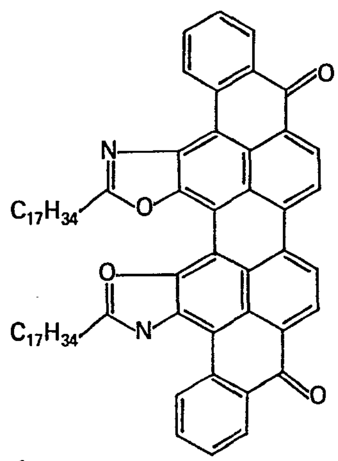

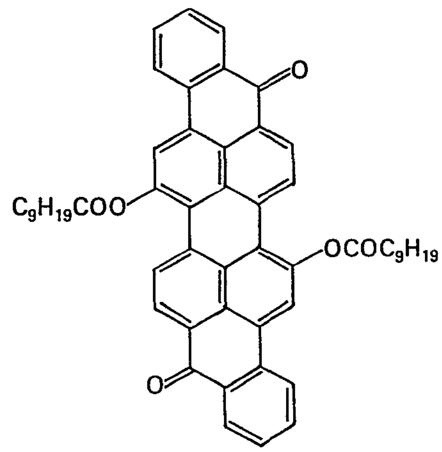

oder

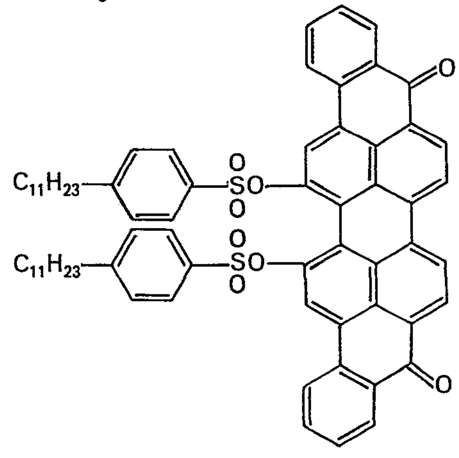

sowie die in der DE-A- 30 325 546 und der US-A-3 733 334 beschriebenen Farbstoffe.

Die fluoreszierenden Farbstoffe werden zweckmässigerweise in transparenten Materialien, z.B. Kunststoffen oder Gläsern, angewendet und müssen daher für die Einarbeitung in solche Materialien geeignet sein.

Als Kunststoffe eignen sich beispielsweise Polyacrylate, Polymethacrylate, Polyolefine, Polycarbonate oder Polyvinylchlorid, wobei die Kunststoffe in bekannter Weise durch Mischpolymerisation modifiziert und auch zweiphasig ausgebaut sein können. Wichtig ist nur eine ausreichende Transparenz; weitere Eigenschaften können, Kunststofftechnik bekannt, nach Wunsch variiert werden.

Für die erfindungsgemässe Verwendung wichtig ist eine möglichst monomolekulare Verteilung der fluoreszierenden Verbindungen im transparenten Substrat. Die Farbstoffe sollen deshalb im Substrat eine gute Löslichkeit haben. Darüberhinaus kann die erwünschte Feinverteilung auch z.B. durch Mahlen, Kneten und Dispergieren erreicht werden.

Die zweckmässige Konzentration der fluoreszierenden Verbindungen im Substrat hängt von den Verbindungen selbst und von der Dicke der gefärbten Schicht ab und kann durch Versuche leicht ermittelt werden. In der Regel liegt sie im Bereich von 0,001 bis 1%.

Die transparenten Substrate werden zweckmässigerweise in Form von Folien oder Platten verwendet; Stärke und sonstige Eigenschaften richten sich dabei nach dem individuellen Verwendungszweck. Durch eine besondere Gestaltung der Substratober- und Unterfläche lässt sich der Anteil des auf einer Substratseite austretenden Fluoreszenzlichtes steigern und damit der Wirkungsgrad des Verfahrens erhöhen. Gegenüber glatten, glasklaren Substraten ergibt auch eine geringe Eintrübung eine Steigerung des austretenden Lichtanteils. Diese Eintrübung kann z.B. durch kristalline Strukturen (z.B. bei Polyolefinen), verstärkende Füllstoffe (z.B. Glasfasern) oder zweiphasigen Polymeraufbau bewirkt werden. Bei zweiphasigen Polymeren kann eine Phase allein den Farbstoff enthalten. Auch sind mehrschichtige Aufbauten denkbar.

Zum Schutz des farbstoffhaltigen Substrats können zusätzlich UV- oder IR-absorbierendere Schichten aufgetragen werden, um die Fotostabilität der verwendeten Fluoreszenzfarbstoffe zu erhöhen oder einen Kühleffekt zu bewirken.

Weiterhin ist es möglich, ein System zu verwenden, in dem der Farbstoff in einer Flüssigkeit (z.B. Wasser oder organischen Lösungsmitteln, wie Glykolen, aromatischen Kohlenwasserstoffen, Chlorkohlenwasserstoffen, Estern, Ketonen oder Amiden) gelöst ist, die sich in einem Platten- oder Röhrensystem befindet. Solche Systeme haben den Vorteil, dass die Farbstofflösung leicht regeneriert und gleichzeitig zum Kühlen oder Heizen benutzt werden kann.

Individuelle Verwendungszwecke sind z.B. der Bau von Gewächshäusern oder die Folienabdeckung von landwirtschaftlichen Kulturen. Beim Bau von Gewächshäusern mit erfindungsgemäss eingefärbten Schichten kann die Lichtsammelwirkung solcher Systeme z.B. im Sinne der DE-OS 26 20 115 auch noch zur fotoelektrischen Energiegewinnung verwendet werden. Die so gewonnene elektrische Energie kann z.B. zur zusätzlichen Beleuchtung der Pflanzen, zu Heiz- oder Kühlzwecken oder zum Betreiben einer Umlaufpumpe oder einer Bewässerungsanlage verwendet werden. Weitere Einzelheiten des erfindungsgemässen Verfahrens können den Beispielen entnommen werden, in denen sich Angaben über Teile und Prozente, sofern nicht anders vermerkt, auf das Gewicht beziehen.

Beispiel 1

0,06 Teile des Farbstoffs der Formel

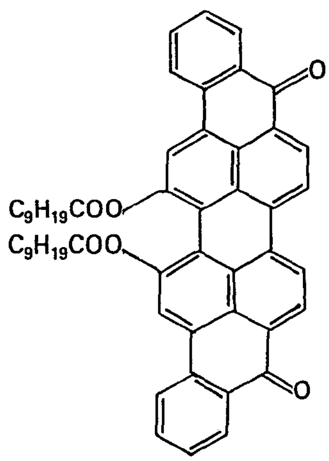

wurden auf 1000 Teile Polymethylmethacrylat-Granulat aufgepudert. Durch Spritzguss wurde aus diesem Material eine 3 mm starke Platte hergestellt und einseitig mit einer mattierten, lichtdurchlässigen Folie beklebt. Die Platte wurde dann mit Tageslicht beleuchtet und das durchgehende Licht mit einem Fluoreszenzspektrometer relativ zu einer ungefärbten, aber sonst gleich behandelten Kunststoffplatte gemessen. Das Ergebnis zeigt Figur 1.

Die relative Lichtintensität ist bei der ungefärbten Kunststoffplatte gleich 100% gesetzt. Bei der gefärbten Platte zeigt sich, dass im Bereich von 470 bis 600 nm, also in dem Bereich, in dem die Pflanze das Licht nicht optimal verwerten kann, kaum Licht durch die Platte kommt, wohingegen im Bereich von 600 bis 700 nm, also im Bereich der Absorption von Chlorophyll, eine Lichtverstärkung eintritt.

Beispiel 2

Es wurde wie in Beispiel 1 gearbeitet, jedoch der Farbstoff der Formel

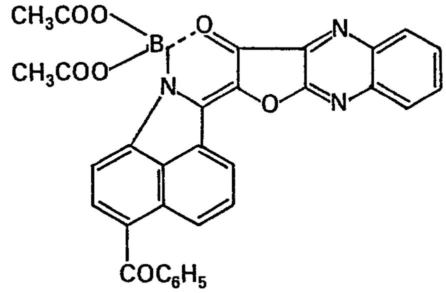

verwendet. Die Messung der relativen Intensität des aus der Platte kommenden Lichtes zeigt Figur 2.

Auch hier ist wieder eine Transformation des für die Pflanze ungünstigen Lichtes in den günstigen Bereich von 600 bis 700 nm festzustellen.

Beispiel 3

Analog Beispiel 1 wurden 0,005 Teile des Farbstoffs der Formel (als Nuancierkomponente)

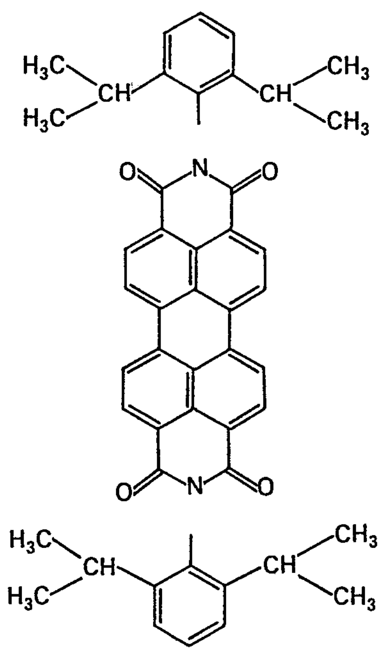

und 0,03 Teile des Farbstoffs der Formel

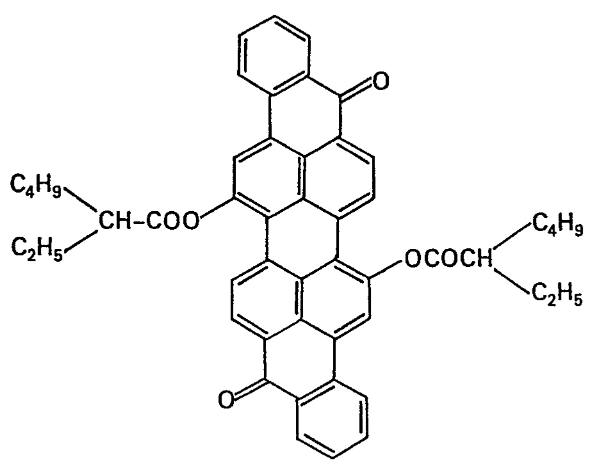

in 1000 Teile Polymethylmethacrylat eingearbeitet und wie beschrieben die relative Lichtintensität gemessen (Figur 3).

Beispiel 4

0,07 Teile des Farbstoffs der Formel

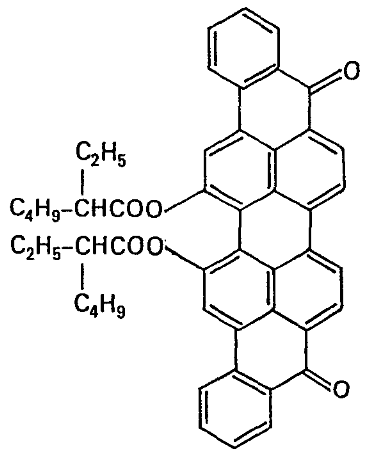

werden in 1000 Teilen Methylmethacrylat gelöst und unter Zusatz von Radikalstartern und Stabilisatoren in bekannter Weise zu einer Platte gegossen, deren Stirnseiten anschliessend verspiegelt werden. Diese Platte wird mit einer Halogenlampe bestrahlt und die Transmission über eine Ulbrichtkugel in bekannter Weise gemessen. In Figur 4 ist die Transmission dieser Platte im Vergleich zur Transmission von Chlorophyll dargestellt.

Es lässt sich die Verstärkung in dem Bereich, in dem Chlorophyll absorbiert, erkennen.

Beispiel 5

Es wurde analog Beispiel 1 gearbeitet, jedoch wurde der Cumarinfarbstoff der Formel

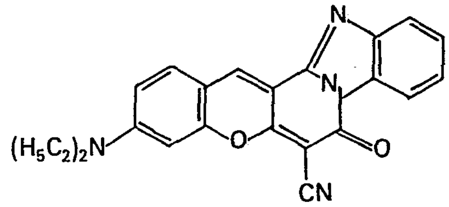

verwendet. Man erhält ein ähnliches Ergebnis.

Beispiel 6

Folien in einer Dicke von 0,15 mm wurden aus einem Polymergemisch folgender Zusammensetzung durch Extrudieren in bekannter Weise hergestellt:

| | | |
|---|---|---|
| Polyvinylchlorid | 100 | Gew.-Teile |
| Weichmacher (Gemisch aus Phthalsäureestern und Sojabohnenöl) | 52 | Gew.-Teile |
| Stabilisator (komplexes System aus Cadmium- und Bariumseifen | 3 | Gew.-Teile |
| Farbstoff aus Beispiel 1 | 0,01 | Gew.-Teile |
| UV-Absorber (2-Hydroxy-4-methoxy-benzophenon) | 0,2 | Gew.-Teile |

Die so erhaltene PVC-Folie zeigt ebenso wie die in Beispiel 1 beschriebene Platte eine Verstärkung des Lichts im Absorptionsmaximum des Chlorophylls. Der Verstärkungseffekt kann durch einseitiges Aufrauhen der Folie noch weiter vergrössert werden.

Analog Beispiel 1 oder 6 können auch Platten oder Folien unter Verwendung folgender Farbstoffe und Polymeren hergestellt werden:

| Beispiel | Farbstoff | Polymer | Lichtverstärkung bei 650 nm |
|---|---|---|---|
| 7 | 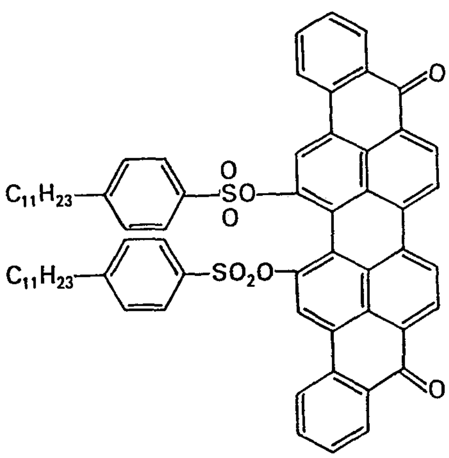 | 80% Polymethylmethacrylat<br>20% Polybutylmethacrylat (Folie) | 1,7 |

| Beispiel | Farbstoff | Polymer | Lichtverstärkung bei 650 nm |
|---|---|---|---|
| 8 | 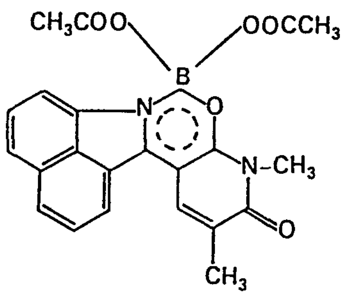 | Polymethacrylat (Platte) | 1,4 |
| 9 | Farbstoff Bsp. 1 | Polycarbonat (Platte) | 1,8 |
| 10 | Farbstoff Bsp. 1 | 80% Polyehtylen<br>20% Polybutylmethacrylat (Folie) | 1,7 |

Beispiel 11

Eine Polymethylmethacrylatplatte, hergestellt nach Beispiel 1, wurde mit einer Tageslichtlampe senkrecht zur Plattenebene bestrahlt. Die Winkelabhängigkeit des Fluoreszenzlichtes bei 630 nm untersuchte man mit einem Goniometer-Fotometer, das mit einem Interferenzfilter ausgestattet war. Die räumliche Integration ergab für Proben verschiedener Oberflächengestaltung folgende relative Intensitäten:

| | relative Lichtintensität |
|---|---|
| 1. Platte mit glatten Flächen | 1,00 |
| 2. Platte mit mattierter Polyesterklebefolie (auf der Einstrahlseite) | 1,30 |
| 3. Platte dito (auf der Ausstrahlseite) | 1,39 |
| 4. Platte auf beiden Seiten mit mattierter Polyesterklebefolie versehen | 1,59 |

**Patentansprüche**

1. Verfahren zur Nutzbarmachung des Wellenlängenbereichs von 470 bis 600 nm für das Pflanzenwachstum und die Fotosynthese mit Hilfe fluoreszierender Verbindungen, dadurch gekennzeichnet, dass man als fluoreszierende Verbindungen nichtionogene Verbindungen der Violanthron- oder Isoviolanthronreihe, Borkomplexe von Naphtholactamderivaten oder die Verbindung der Formel

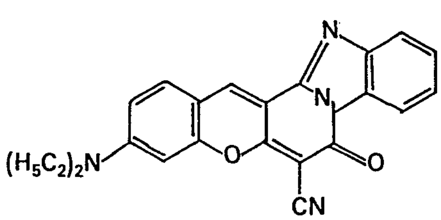

verwendet.

2. Verfahren gemäss Anspruch 1 oder 2, dadurch gekennzeichnet, dass man die nichtionogenen fluoreszierenden Verbindungen eingearbeitet in transparenten Kunststoffen verwendet.

**Claims**

1. A method of utilizing the wavelength range from 470 to 600 nm for plant growth and photosynthesis, with the aid of a fluorescent compound, wherein a non-ionic compound of the violanthrone or isoviolanthrone series, a boron complex of a naphtholactam derivative, or the compound of the formula

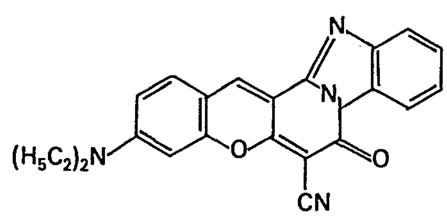

is used as the fluorescent compound.

2. A method as claimed in claim 1 or 2, wherein the non-ionic fluorescent compound is incorporated into a transparent plastic.

**Revendications**

1. Procédé pour rendre utilisable la gamme de longueurs d'onde de 470 à 600 nm pour la croissance des plantes et la photosynthèse à l'aide de composés fluorescents, caractérisé en ce qu'on utilise, comme composés fluorescents, des composés non ionogènes de la série de la violanthrone ou de l'isoviolanthrone, des complexes du bore et de dérivés de naphtolactame ou le composé de formule

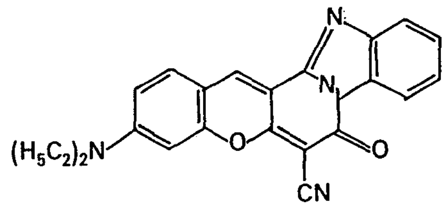

2. Procédé selon la revendication 1 ou 2, caractérisé en ce qu'on utilise les composés fluorescents non ionogènes à l'état incorporé dans des matières plastiques transparentes.

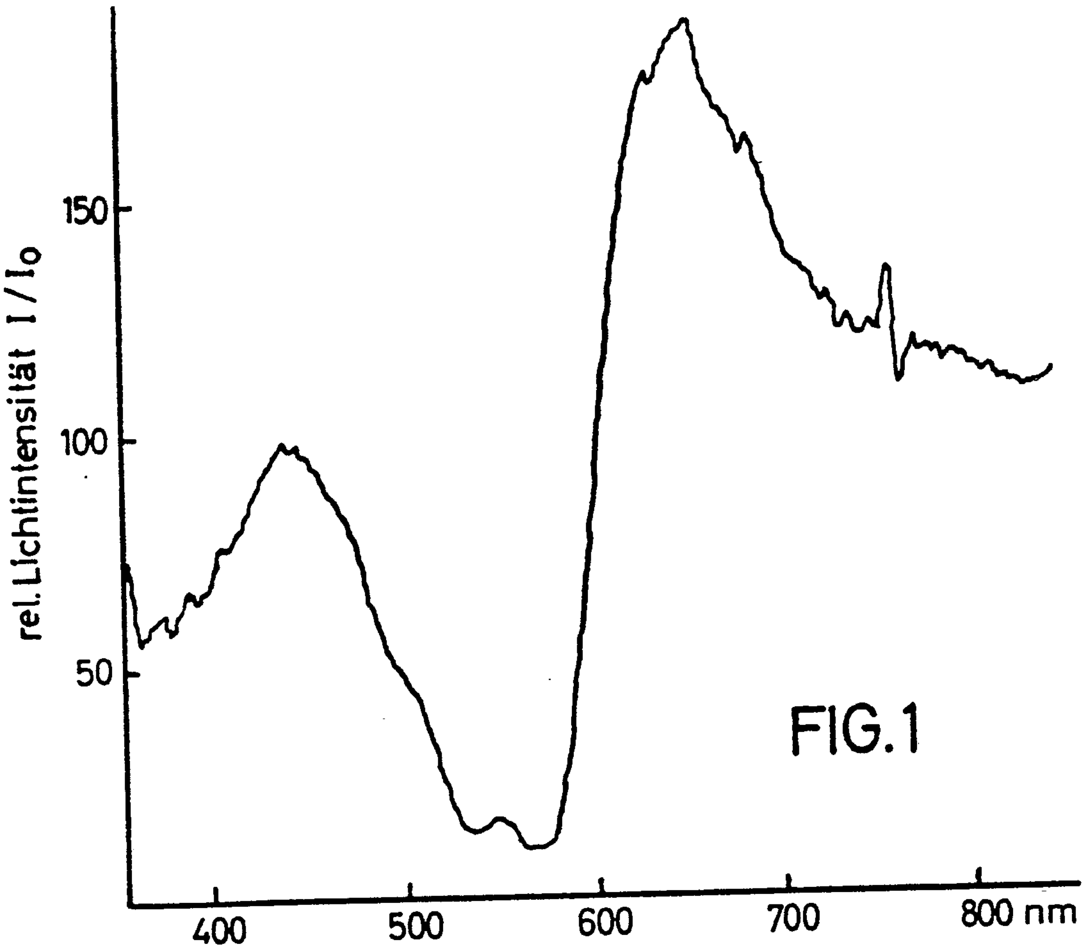

rel. Lichtintensität I / I₀
150
100
50
400
500
600
700
800 nm


FIG.1

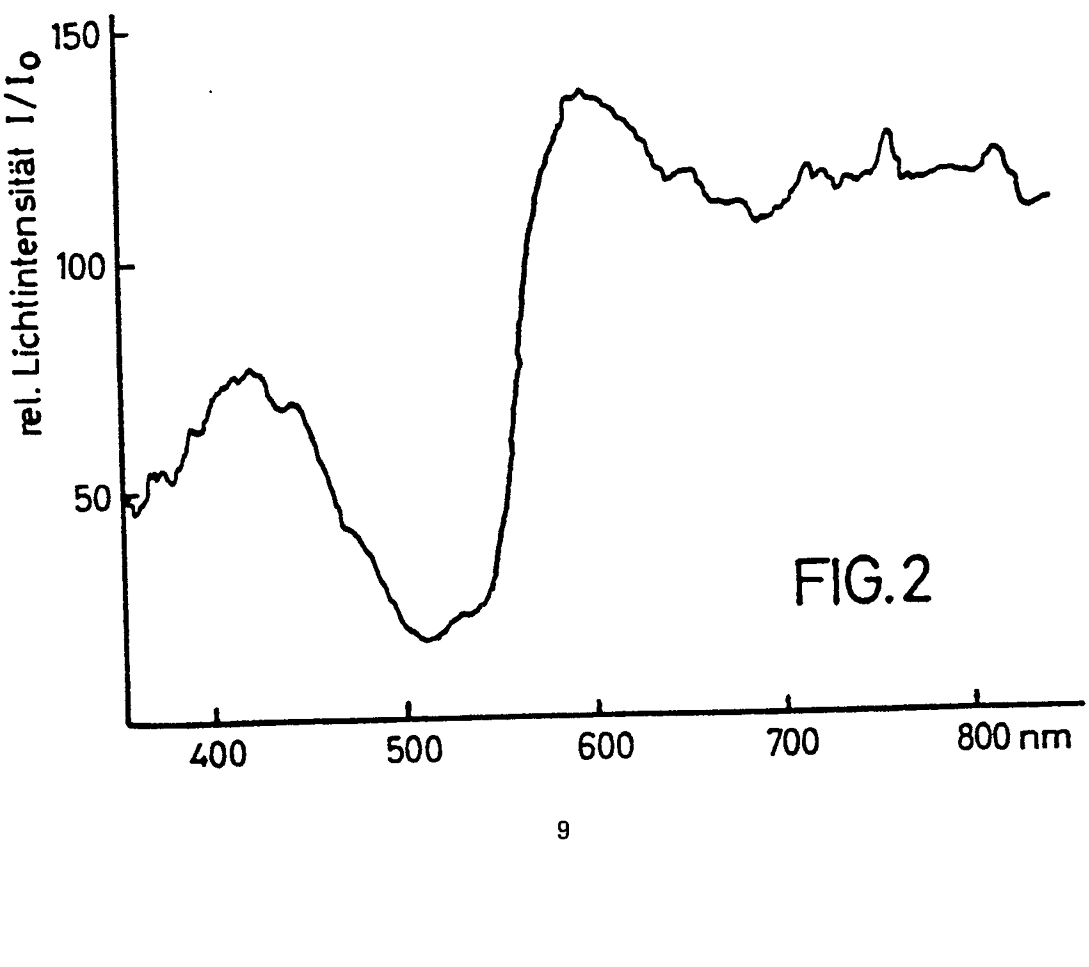

rel. Lichtintensität I / I₀
150
100
50
400
500
600
700
800 nm


FIG.2

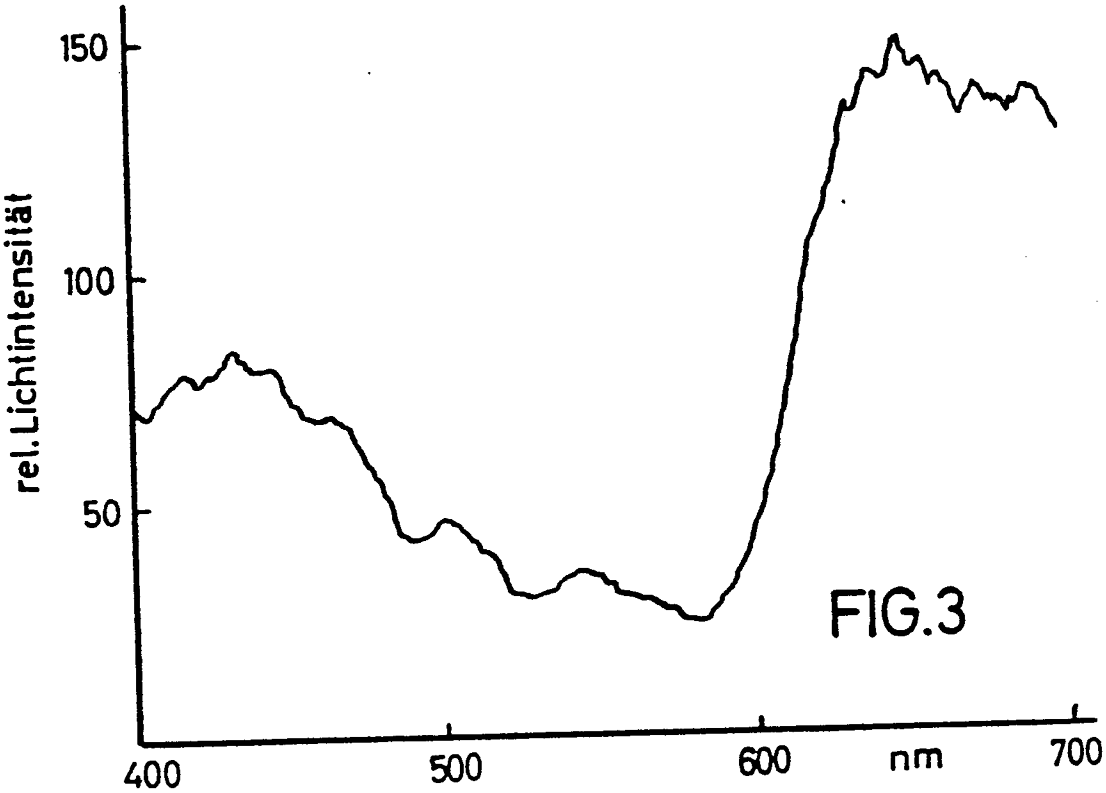
150
100
50
rel. Lichtintensität
400
500
600
nm
700

FIG.3

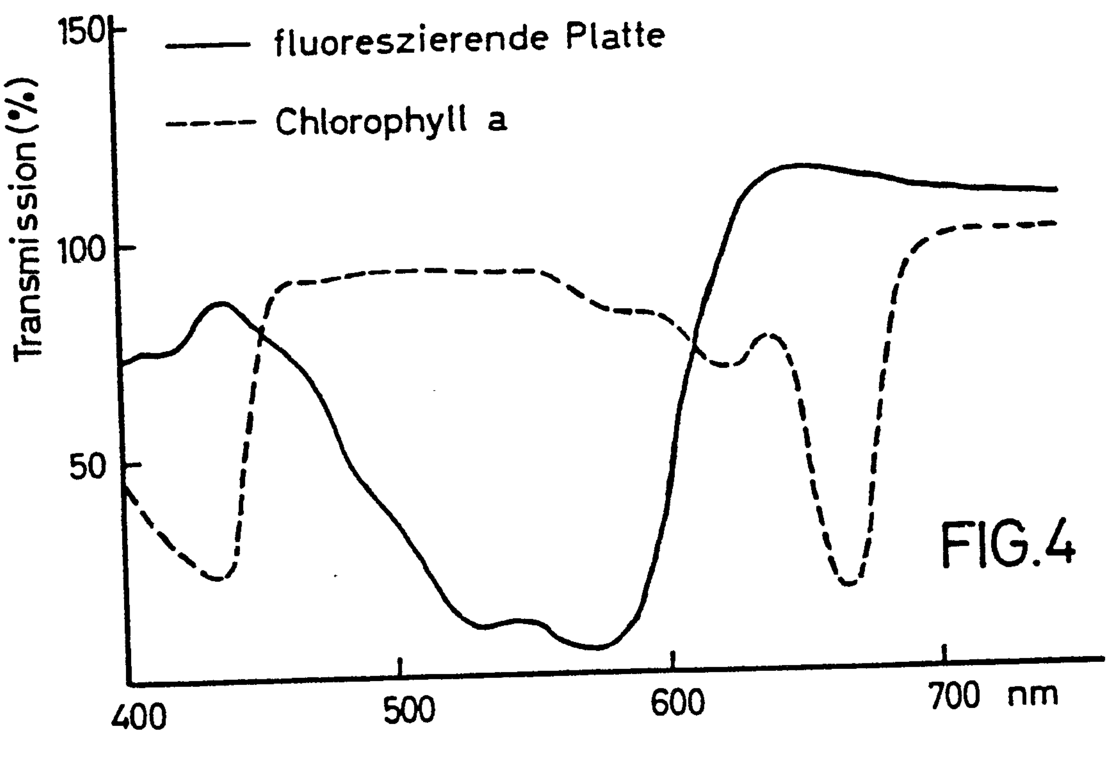
150
100
50
Transmission (%)
—— fluoreszierende Platte
---- Chlorophyll a
400
500
600
700 nm

FIG.4